# EUROPEAN PATENT SPECIFICATION

(11) **EP 0 414 406 B1**
(45) Date of publication and mention of the grant of the patent: **12.10.1994**
(21) Application number: 90308658.5
(22) Date of filing: 07.08.1990
(51) Int. Cl.: B60C 9/22

(54) **Pneumatic tire for two-wheeled vehicle and method of producing the same**
Luftreifen für zweirädriges Fahrzeug und Verfahren zur Herstellung
Bandage pneumatique pour véhicules à deux roues et procédé de fabrication

(30) Priority: 22.08.1989 JP 214183/89; 08.06.1990 JP 148465/90
(43) Date of publication of application: 27.02.1991
(73) Proprietor: Bridgestone Corporation, Tokyo 104 (JP)
(72) Inventor: Takase, Kiyoshi, Kodaira City, Tokyo (JP)
(74) Representative: Whalley, Kevin

(56) References cited:
- EP-A- 0 319 588
- DE-A- 3 535 064
- LU-A- 85 964
- US-A- 3 456 146

## Description

This invention relates to a pneumatic tire for a two-wheeled vehicle, and more particularly to a pneumatic tire for a two-wheeled vehicle having a belt composed of cords spirally wound and extending in a width direction of the tire and a method of producing the same.

There have been used radial tires for two-wheeled vehicles, each including a carcass composed of plies of organic fiber cords arranged in one direction at angles 75° to 90° with respect to an equatorial plane of the tire, and a belt composed of cords having a high modulus of elasticity made of, for example, high modulus polyester, rayon or aromatic polyamide fibers and spirally wound about the carcass. With such a radial tire, a tread does not extend radially outwardly of the tire with the aid of a so-called "hoop effect" of the belt so that a tread rubber moves only to a lesser extent, even running at high speeds. Therefore, such a radial tire has many advantages of reduced heating and less rolling resistance and higher wear-resistance in comparison with bias tires. Moreover, such a radial tire is light weight and undergoes less decrease in contact area when contacting the road.

With the pneumatic tires for two-wheeled vehicles, sectional configurations and hence circumferential lengths of the tires greatly change. In winding cords for forming belt plies, therefore, a single cord is in general spirally wound about a carcass in consideration of cornering characteristics.

However, the winding operation of the single cord to form a belt with a required accuracy takes much time and greatly prolongs the time for producing a tire. Therefore, it is desired to shorten the time for the winding operation.

In order to shorten the winding operation, it may be considered to wind a single cord at a higher speed. However, with such a faster winding operation, it becomes difficult for a cord winding device to follow up the faster winding, keeping the requisite accuracy of wound cords. Therefore, the faster winding operation does not sufficiently overcome the above problem.

Attention is drawn to the disclosures of DE-A-3535064 and EP-A-0319588.

DE-A-3535064 discloses a pneumatic tire for a two-wheeled vehicle including a pair of sidewalls, a tread toroidally continuous therewith and a carcass reinforcing said sidewalls and the tread and composed of at least one layer of a ply having organic fiber cords arranged in one direction at angles of 70° to 90° with respect to an equatorial plane of the tire, both ends of the ply of the carcass being turned up radially outwardly around bead rings embedded in radially inner ends of the sidewalls, and further including at least one layer of a belt composed of cords spirally wound about the carcass and extending in a width direction of the tire, wherein said belt comprises a plurality of cords having a modulus of elasticity more than 600 kg/mm² and being wound in a circumferential direction of the tire, turns of the wound cords being adjacent with each other in the width direction of the tire.

That is, DE-A-3535064 teaches a pneumatic tire which comprises a belt formed of at least one cord having a modulus of elasticity more than 600 kg/mm². In this case, however, there is disclosed carrying out a spiral winding of either a single cord, or a strip in which two or more cords are arranged in parallel with each other and coated by rubber as shown in Fig. 3. There is, however, no disclosure therein of the spiral winding of a plurality of cords which are independent from each other without forming a strip.

As exemplified by DE-A-3535064, in the case of pneumatic tires comprising at least one spirally wound belt cord, it has been a conventional practice to carry out a spiral winding of either a single cord or a strip formed of a plurality of cords. The present invention, as defined below, makes use of a belt cord having a high modulus of elasticity more than 600 kg/mm², to form a belt for tires for two-wheeled vehicles having a rounded crown portion of which the radius of curvature in the cross-section is extremely small as compared with tires for passenger cars.

In this instance, spiral winding of a strip proved to be quite disadvantageous in that, due to the round configuration of the crown portion, the cords of the same strip juxtaposed in the tire width direction are subjected to non-uniform tensile force. That is, the cord situated on the tread center side of a larger diameter is subjected to a higher tensile force. The problem of the non-uniform tensile force could be solved by spiral winding of a single cord, though such a measure requires a substantial time for the winding making it difficult to improve the manufacturing productivity.

EP-A-0319588 discloses a method of manufacturing pneumatic tires comprising a belt which is formed by spiral winding of at least one cord. More particularly, the winding is carried out with respect either to a single cord, as shown in Fig. 8, or to a plurality of cords forming a rubber-coated strip as shown in Fig. 7. There is, however, no disclosure therein of a pneumatic tire wherein a plurality of cords are spirally wound without forming a strip. Moreover, because EP-A-0319588 does not relate to pneumatic tires for two-wheeled vehicle whose crown has a small radius of curvature, there is no suggestion of the problem of non-uniform tensile force between juxtaposed cords forming a belt.

It is an aim of the invention to provide a pneumatic tire for a two-wheeled vehicle and a method of producing the same, which shorten the time required for cord winding operation and increase internal rigidity of the tire.

The present invention provides a pneumatic tire for a two-wheeled vehicle including a pair of sidewalls, a tread toroidally continuous therewith and a carcass reinforcing said sidewalls and the tread and composed of at least one layer of a ply having organic fiber cords arranged in one direction at angles 75° to 90° with respect to an equatorial plane of the tire, both ends of the ply of the carcass being turned up radially outwardly around bead rings embedded in radially inner ends of the sidewalls, and further including at least one layer of a belt composed of cords spirally wound about the carcass and extending in a width direction of the tire, characterized in that said belt comprises a plurality of independent cords having a modulus of elasticity more than 600 kg/mm² and being wound in a circumferential direction of the tire, turns of the wound cords being adjacent with each other in the width direction of the tire.

When producing the above tire, according to the method of the invention, the cords are wound in a circumferential direction of the tire and adjacent with each other in the width direction of the tire so that one cord is wound about the carcass ahead of the other cord.

According to the invention, one cord is wound about the carcass ahead of winding the other cord to arrange the turns of the cords adjacent with each other in the width direction of the tire so that the number of the turns of the cords to be wound per unit time is increased. Therefore, the time required for winding the cords is shortened in comparison with the case of winding a single cord so that the time required for producing a tire is also shortened.

Moreover, one of the cords to be adjacent with each other is wound ahead of the other cord so that the number of the cords per unit width of the tire is adjusted to improve internal rigidity and hence traction performance of the tire.

The invention will be further described, by way of example, with reference to the accompanying drawings, in which:

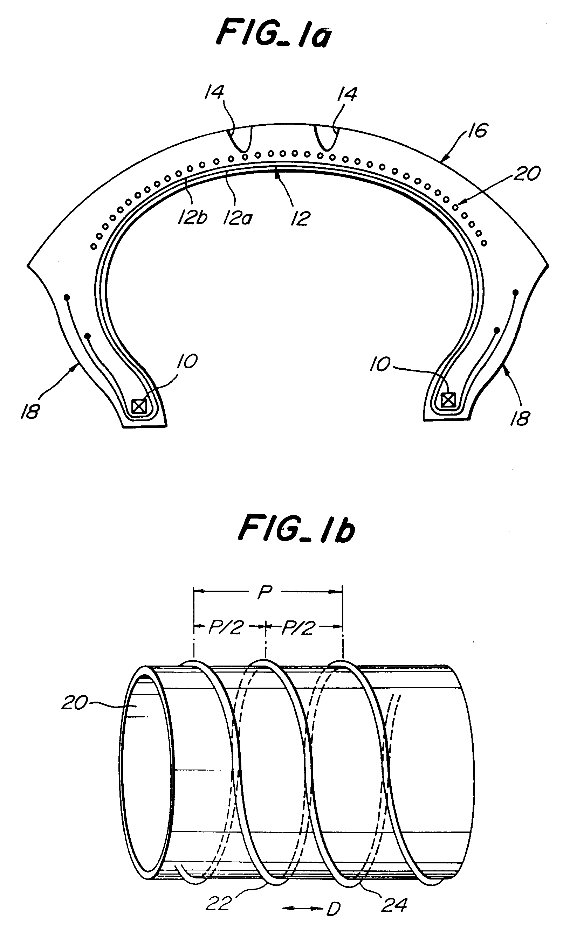

Fig. 1a is a sectional view illustrating a pneumatic tire for a two-wheeled vehicle according to the invention taken along a plane including a rotating axis of the tire; and
Fig. 1b is a schematic view illustrating turns of a set of cords constituting the belt used in the tire shown in Fig. 1a.

Fig. 1a is a sectional view illustrating a preferred embodiment of a pneumatic tire for a two-wheeled vehicle according to the invention taken along a plane including a rotating axis of the tire. The tire includes a carcass 12 whose ends are turned up about a pair of annular bead cores 10 from inside to outside of the tire. The carcass 12 comprises two plies 12a and 12b, each including organic fiber cords, for example, 66 nylon arranged at angles 75° to 90° with respect to an equatorial plane of the tire.

A tread 16 is formed with a plurality of (two in this embodiment) circumferential main grooves 14 extending in a circumferential direction of the tire. The tread 16 is toroidally continuous with sidewalls 18. Between the tread 16 and the carcass 12 is a belt 20 formed by cords spirally wound to extend in a width direction of the tire. The cords are made of fibers having a high modulus of elasticity, selected from high modulus polyester, polyvinyl alcohol, rayon, and aromatic polyamide fibers. In order to improve the rigidity of the carcass 12 in the circumferential direction of the tire, it is preferable to use cords having a modulus of elasticity more than 600 kg/mm².

As shown in Fig. 1b schematically illustrating part of the tire, a plurality (two in this embodiment) of independent cords 22 and 24 are wound around the carcass 12 in the circumferential direction and adjacent with each other to form the belt 20. The two cords 22 and 24 are wound around the carcass 12 in a manner that between two turns of the one cord 22 with a pitch P is one turn of the other cord 24, with the result that the turns of the two cords are arranged like threads of a multiple thread screw with a pitch P/2.

According to the invention a plurality (two in this embodiment) of independent cords to form a belt are wound about a carcass so that the cords are adjacent with each other in the width direction of the tire in this manner, thereby increasing a width of wound cords to be obtained per unit time. It has been found that the time required for winding cords according to the invention is approximately 25% to 40% shorter than that in winding a single cord. The number of the cords is not limited to that of this embodiment. Three or more cords may of course be wound to form a belt.

In this embodiment, moreover, when cords having substantially the same diameters are wound to form a belt, one cord is wound ahead of winding the other cord in consideration of a positional relation of winding devices for the respective cords.

In practice, one cord may be wound with a pitch smaller than a diameter of the cord, while the other cord is wound between turns of the preceding cord. This holds true in the case using more than three cords. However, two or three cords are preferable because otherwise there is required a large-sized installation due to an increased number of winding devices. It is a matter of course that a plurality of cords may be simultaneously wound as the case may be.

The following Table shows numbers of cords per unit width of belts and time required for producing tires in comparison with those according to the invention and the prior art. Each of the tires according to the invention has a size 170/60R17 and includes a belt having two cords of 1500d/2 thickness. Each of the tires according to the prior art includes a belt having one cord of 1500d/2 thickness. The time for producing the tires and the number of cords per unit width are estimated by index numbers when the time required and the number of cords per unit width for the tires of the prior art are assumed as 100.

**Table**

| | Tire according to the invention | Tire of the prior art |
|---|---|---|
| Time for producing | 75 | 100 |
| Number of cords | 110 | 100 |

As can be seen from the Table, according to the invention the time required for producing the tire can be shortened to about 75% and the number of cords to form the belt is 10% increased in comparison with those of the prior art.

As above described, according to the invention the time required for winding cords to form a belt can be greatly shortened to improve the productivity. In addition, the invention can provide a tire having a high internal rigidity or improved traction performance.

## Claims

1. A pneumatic tire for a two-wheeled vehicle including a pair of sidewalls (18), a tread (16) toroidally continuous therewith and a carcass (12) reinforcing said sidewalls and the tread and composed of at least one layer of a ply having organic fiber cords arranged in one direction at angles of 75° to 90° with respect to an equatorial plane of the tire, both ends of the ply of the carcass being turned up radially outwardly around bead rings (10) embedded in radially inner ends of the sidewalls, and further including at least one layer of a belt (20) composed of cords spirally wound about the carcass and extending in a width direction of the tire, characterized in that said belt comprises a plurality of independent cords (22, 24) having a modulus of elasticity more than 600 kg/mm² and being wound in a circumferential direction of the tire, turns of the wound cords being adjacent with each other in the width direction of the tire.

2. A pneumatic tire as claimed in Claim 1, characterized in that said belt comprises two cords (22, 24), and between two turns of one cord is one turn of the other cord wound about the carcass.

3. A pneumatic tire as claimed in Claim 1, characterized in that said belt comprises three cords.

4. A method of producing a pneumatic tire for a two-wheeled vehicle including a pair of sidewalls (18), a tread (16) toroidally continuous therewith and a carcass (12) reinforcing said sidewalls and the tread and composed of at least one layer of a ply having organic fiber cords arranged in one direction at angles of 75° to 90° with respect to an equatorial plane of the tire, both ends of the ply of the carcass being turned up radially outwardly around bead rings (10) embedded in radially inner ends of the sidewalls, and further including at least one layer of a belt (20) composed of cords spirally wound about the carcass and extending in a width direction of the tire, and said belt including a plurality of independent cords (22, 24) having a modulus of elasticity more than 600 kg/mm² and being wound in a circumferential direction of the tire, turns of the wound cords being adjacent with each other in the width direction of the tire, wherein one cord is wound about the carcass ahead of winding the other cord.

## Patentansprüche

1. Luftreifen für ein zweirädriges Fahrzeug, der zwei Seitenwände (18), eine sich toroidförmig daran anschließende Lauffläche (16), und eine die Seitenwände und die Lauffläche verstärkende Karkasse (12) umfaßt, wobei diese Karkasse aus mindestens einer Schicht mit einer Lage aus Cordfäden aus organischer Faser besteht, die in einer Richtung unter einem Winkel von 75° bis 90° bezüglich der Äquatorebene des Reifens angeordnet sind, wobei beide Enden der Lage der Karkasse radial nach außen um Wulstringe (10) herum geführt sind, die in radial innere Enden der Seitenwände eingebettet sind, und der weiterhin mindestens eine Schicht eines Gürtels (20) umfaßt, die aus Cordfäden besteht, die spiralförmig um die Karkasse herum gewickelt sind und sich in der Breitenrichtung des Reifens erstrecken, dadurch gekennzeichnet, daß dieser Gürtel eine Vielzahl von unabhängigen Cordfäden (22, 24) aufweist, die einen Elastizitätsmodul von über 600 kg/mm² haben, und in der Umfangsrichtung des Reifens gewickelt sind, wobei die Windungen der gewickelten Cordfäden in der Breitenrichtung des Reifens aneinander angrenzen.

2. Luftreifen gemäß Anspruch 1, dadurch gekennzeichnet, daß der Gürtel zwei Cordfäden (22, 24) aufweist, und zwischen zwei Windungen eines Cordfadens eine Windung des anderen Cordfadens um die Karkasse herum gewickelt ist.

3. Luftreifen gemäß Anspruch 1, dadurch gekennzeichnet, daß der Gürtel drei Cordfäden aufweist.

4. Verfahren zum Herstellen eines Luftreifens für ein zweirädriges Fahrzeug, der zwei Seitenwände (18), eine sich toroidförmig daran anschließende Lauffläche (16), und eine die Seitenwände und die Lauffläche verstärkende Karkasse (12) umfaßt, wobei diese Karkasse aus mindestens einer Schicht mit einer Lage aus Cordfäden aus organischer Faser besteht, die in einer Richtung unter einem Winkel von 75° bis 90° bezüglich der Äquatorebene des Reifens angeordnet sind, und beide Enden der Lage der Karkasse radial nach außen um Wulstringe (10) herum geführt sind, die in radial innere Enden der Seitenwände eingebettet sind, und der weiterhin mindestens eine Schicht eines Gürtels (20) umfaßt, die aus Cordfäden besteht, die spiralförmig um die Karkasse herum gewickelt sind und sich in der Breitenrichtung des Reifens erstrecken, wobei dieser Gürtel eine Vielzahl von unabhängigen Cordfäden (22, 24) umfaßt, die einen Elastizitätsmodul von über 600 kg/mm² haben, und in der Umfangsrichtung des Reifens gewickelt sind, und die Windungen der gewickelten Cordfäden in der Breitenrichtung des Reifens aneinander angrenzen, wobei bei diesem Verfahren ein Cordfaden vor dem anderen Cordfaden um die Karkasse gewickelt wird.

## Revendications

1. Bandage pneumatique pour un véhicule à deux roues, englobant une paire de flancs (18), une bande de roulement (16) continue d'une façon toroïdale avec ces derniers et une carcasse (12) renforçant lesdits flancs et la bande de roulement, et qui est composée d'au moins une couche d'une nappe possédant des câblés en fibres organiques arrangés dans une direction en formant des angles de 75° à 90° par rapport au plan équatorial du bandage pneumatique, les deux extrémités de la nappe de carcasse étant retournées vers le haut en direction radiale vers l'extérieur autour de tringles de talons (10) enrobées dans les extrémités radialement internes des flancs, et englobant en outre au moins une couche d'une ceinture (20) composée de câblés enroulés en spirale autour de la carcasse et s'étendant sur la largeur du bandage pneumatique, caractérisé en ce que ladite ceinture comprend plusieurs câblés indépendants (22, 24) possédant un module d'élasticité supérieur à 600 kg/mm² et étant enroulés en direction circonférentielle du bandage pneumatique, les spires des câblés enroulés étant mutuellement adjacentes sur la largeur du bandage pneumatique.

2. Bandage pneumatique selon la revendication 1, caractérisé en ce que ladite ceinture comprend deux câblés (22, 24) et, entre deux spires d'un câblé, est enroulée une spire de l'autre câblé autour de la carcasse.

3. Bandage pneumatique selon la revendication 1, caractérisé en ce que ladite ceinture comprend trois câblés.

4. Procédé de fabrication d'un bandage pneumatique pour un véhicule à deux roues, englobant une paire de flancs (18), une bande de roulement (16) continue d'une façon toroïdale avec ces derniers et une carcasse (12) renforçant lesdits flancs et la bande de roulement, et qui est composée d'au moins une couche d'une nappe possédant des câblés en fibres organiques arrangés dans une direction en formant des angles de 75° à 90° par rapport au plan équatorial du bandage pneumatique, les deux extrémités de la nappe de carcasse étant retournées vers le haut en direction radiale vers l'extérieur autour de tringles de talons (10) enrobées dans les extrémités radialement internes des flancs, et englobant en outre au moins une couche d'une ceinture (20) composée de câblés enroulés en spirale autour de la carcasse et s'étendant sur la largeur du bandage pneumatique, et ladite ceinture englobant plusieurs câblés indépendants (22, 24) possédant un module d'élasticité supérieur à 600 kg/mm² et étant enroulés en direction circonférentielle du bandage pneumatique, les spires des câblés enroulés étant mutuellement adjacentes sur la largeur du bandage pneumatique, dans lequel un câblé est enroulé autour de la carcasse avant d'enrouler l'autre câblé.
